# EUROPÄISCHE PATENTANMELDUNG

(11) **EP 3 460 204 A1**
(43) Veröffentlichungstag der Anmeldung: **27.03.2019**
(21) Anmeldenummer: 17192918.5
(22) Anmeldetag: 25.09.2017
(51) Int. Cl.: F01K 7/38, F22D 1/32, F01D 25/24, F01D 25/28, F01K 9/00

(54) **DAMPFTURBINENANLAGE**

(71) Anmelder: Siemens Aktiengesellschaft, 80333 München (DE)
(72) Erfinder: Thamm, Norbert, 45133 Essen (DE); Ziwes, Ralf, 46539 Dinslaken (DE)

(57) **Zusammenfassung**

Die Erfindung betrifft eine Dampfturbinenanlage mit einer Niederdruck-Teilturbine (2) mit einer horizontalen Abströmung, wobei die Teilturbine eine Dampfentnahmeöffnung aufweist und diese Dampfentnahmeöffnung mit einem Vorwärmer (11) verbunden ist, der unterhalb der Niederdruck-Teilturbine (2) angeordnet ist, wobei die Niederdruck-Teilturbine (2) auf einem Montagerahmen (5) gestellt ist.

## Beschreibung

Die Erfindung betrifft eine Dampfturbinenanlage, mit einer eine Teilturbine umfassenden Dampfturbine, die auf einem Montagerahmen gestellt ist und die mindestens eine horizontale Abströmung aufweist, wobei die Teilturbine eine Dampfentnahmeöffnung und/oder eine Anzapfung aufweist, wobei die Dampfentnahmeöffnung und/oder Anzapfung mit einem Vorwärmer, der zum Vorwärmen von Speisewasser strömungstechnisch verbunden ist.

Bei einer kombinierten Gas- und Dampfturbinenkraftwerksanlage werden die aus einer Gasturbine abströmenden heißen Abgase zur Beheizung eines so genannten Abhitzedampferzeugers genutzt, indem durch Verdampfung eines flüssigen Strömungsmediums der zum Betrieb einer Dampfturbine notwendige Dampf erzeugt wird. Die Gasturbine und die Dampfturbine dienen dabei in der Regel zum Antrieb eines oder mehrerer elektrischer Generatoren zur Erzeugung elektrischer Energie. Durch die Ausnutzung der im Abgasstrom der Gasturbine enthaltenen Restwärme lässt sich bei einer derart kombinierten Gas- und Dampfturbinenkraftwerksanlage ein besonders hoher Gesamtwirkungsgrad erzielen und somit Brennstoff einsparen, was nicht nur unter rein wirtschaftlichen Gesichtspunkten, sondern auch im Hinblick auf Belange des Umweltschutzes und der Schonung natürlicher Ressourcen eine immer größere Rolle spielt. Daneben existieren auch noch reine Dampfkraftwerksanlagen, bei denen Dampf für die Dampfturbine in einem fossil beheizten Dampfkessel oder Dampferzeuger erzeugt wird.

Üblicherweise wird das zu verdampfende Strömungsmedium
- in der Regel Wasser bzw. ein Wasser-Dampf-Gemisch - in einem Kreislauf geführt, der zur Reduzierung von xergieverlusten bei der Wärmeübertragung mehrere Druckstufen
- in der Regel zwei oder drei - aufweisen kann. Jeder dieser Druckstufen des Wasser-Dampf-Kreislaufs ist üblicherweise eine entsprechende Turbinenstufe oder Teilturbine der Dampfturbinenanlage zugeordnet, in der sich der einströmende Dampf unter Leistung von Arbeit vollständig oder teilweise entspannt. Beispielsweise kann es vorgesehen sein, den aus einer Hochdruck- oder Mitteldruckturbine abströmenden, dort auf Niederdruckniveau entspannten Dampf nach einer Zwischenüberhitzung im Dampfkessel einer Niederdruckturbine zuzuleiten und in dieser möglichst vollständig zu entspannen.

Für eine möglichst effektive Ausnutzung der im Niederdruckdampf enthaltenen Enthalpie wird eine derartige Niederdruck-Teilturbine üblicherweise im Kondensationsbetrieb mit möglichst niedrigem Kondensatordruck betrieben. Dazu ist die Abströmung der Turbine über einen auch als Dampfdom bezeichneten Abdampfkanal mit einem Kondensator verbunden, in dem beispielsweise eine Anzahl von zu Wärmetauscherflächen zusammengefassten, kaltes Kühlwasser führenden Rohrbündeln angeordnet ist. Beim Betrieb der Anlage kondensiert der in den Kondensator einströmende Abdampf außen an den Kühlrohren, wobei sich gegenüber der Umgebung ein Unterdruck ausbildet. Das im Kondensator zu erreichende Vakuum hängt dabei im Wesentlichen von der Ein- und Austrittstemperatur des Kühlwassers sowie von der Qualität des Wärmeübergangs in den einzelnen Rohren ab und kann bei günstigen Kühlwasserbedingungen auf unter 40 mbar fallen. Der Dampf wird dann nach verrichteter Expansionsarbeit ausgangsseitig gewissermaßen aus der Dampfturbine herausgesaugt.

Bislang wurde bei derartigen Anlagen der Dampfturbosatz mit den beiden Niederdruck-Teilturbinen aus konstruktiven Gründen, vor allem wegen des begrenzten Platzangebotes im Maschinengebäude und wegen des erforderlichen Raumes für die Kühlwasseranschlüsse und Rohrauszugsräume der Kondensatoren, auf einem Hochfundament mit einer von Fundamentstützen getragenen oder abgestützten Tischplatte gelagert. Bei einer derartigen Hochaufstellung weisen die Niederdruck-_Teilturbinen jeweils eine einseitige vertikale Abströmung nach unten auf, die über einen Dampfdom mit vertikaler Strömungsrichtung mit einem unterhalb des Turbinengehäuses "hängend" angeordneten Kondensator verbunden ist.

Zwar ist es auf diese Weise relativ einfach möglich, auch bei einer Hintereinander-Anordnung mehrerer Niederdruck-Teilturbinen auf einem Wellenstrang die kühlwasserseitigen Anbindungen unterzubringen, jedoch ist aufgrund der Hochaufstellung eine Gebäudeerhöhung sowie ein aufwändiges und teures Turbosatzfundament erforderlich. Speziell bei Gas- und Dampfturbinenkraftwerksanlagen, insbesondere bei solchen mit einer in einem gemeinsamen Maschinenhaus untergebrachten Gasturbinen-/Generator-Einheit, ergibt sich der Nachteil, dass das bisher für Anlagen mit einer einzigen Niederdruck-Teilturbine gemeinsame, vergleichsweise niedrige Maschinengebäude nicht mehr beibehalten werden kann. Durch die Erhöhung im Bereich des Dampfturbosatzes ergibt sich ein Absatz in der Decke des Gebäudes, durch den insbesondere der Einbau einer gemeinsamen, sowohl den Gasturbinen- als auch den Dampfturbinenbereich überspannenden Kranbahn für einen Montage- und Servicekran unmöglich gemacht wird. Andernfalls müsste das gesamte Gebäude durchgängig erhöht werden, was jedoch ausgesprochen kostenintensiv und nachteilig wäre.

Es sind so genannte Tiefaufstellungen bekannt, bei denen der Kondensator einseitig oder beidseitig neben der Niederdruck-Teilturbine steht, allerdings können bei solch einer Tiefaufstellung bisher keine großen Dampfentnahmen oder Anzapfungen aus der Niederdruckteilturbine realisiert werden, da nach unten hin nicht genügend Platz vorhanden ist. Außerdem sind Niederdruck-Teilturbinen oftmals mit einseitiger oder beidseitiger Abströmung derart ausgebildet, dass unter ihnen ein Bodenblech angeordnet ist zum Abstützen oder zumindest zur Führung. Diese Abstützungen bzw. Fix- und Führungspunkte machen eine Dampfentnahme oder Anzapfung durch das Bodenblech technisch nur schwer möglich.

Daher wurden Dampfturbinen mit vergleichsweise großen Dampfentnahmen oder Anzapfungen in einer so genannten Hochaufstellung ausgeführt. Dabei sind die Niederdruck-Teilturbinen über dem Kondensator angeordnet, so dass die Entnahme- und Anzapfleitungen durch einen Kondensatordom geführt werden können. Außerdem können entsprechende Wärmetauscher, so genannte Vorwärmer, im Kondensatordom angeordnet werden.

Der Erfindung liegt die Aufgabe zugrunde, eine Dampfturbinenanlage anzugeben, die mit besonders geringem Aufwand kostengünstig errichtet werden kann und bei der insbesondere auch die baulichen Anforderungen an ein die Anlage umgebendes Gebäude und/oder an eine für Montage und Servicearbeiten bereit gestellte Krananlage gering gehalten sind.

Gelöst wird diese Aufgabe durch eine Dampfturbinenanlage, mit einer eine Teilturbine umfassenden Dampfturbine, die auf einen Montagerahmen gestellt ist und die mindestens eine horizontale Abströmung aufweist, wobei die Teilturbine eine Dampfentnahmeöffnung und/oder eine Anzapfung aufweist, wobei die Dampfentnahmeöffnung und/oder Anzapfung mit einem Vorwärmer, der zum Vorwärmen von Speisewasser strömungstechnisch verbunden ist, wobei der Vorwärmer unterhalb der Teilturbine angeordnet ist.

Die Erfindung geht von dem Aspekt aus, dass bei einer Niederdruck-Teilturbine eine Dampfturbine mit einseitiger Abströmung in einer alternativen Ausführungsform auch mit beidseitiger Abströmung auf einen Montagerahmen gestellt werden kann, dass ein Vorwärmer unterhalb des Niederdruck-Außengehäuses platziert werden kann.

Ein Vorteil der Erfindung ist, dass die Dampfentnahme aus der Niederdruck-Teilturbine zu einer Reduzierung der Bauhöhe führt. Des Weiteren kann eine Reduzierung der Kranhakenhöhe erfolgen, wobei ebenfalls daraus eine resultierende Einsparung an der Maschinenhaushöhe erfolgen kann. Ein weiterer Vorteil der Erfindung ist, dass solche erfindungsgemäßen Turbinenkonfigurationen auch bei Modernisierungskonzepten für bestehende Altanlagen zur Anwendung kommen.

Vorteilhafte Weiterbildungen sind in den Unteransprüchen angegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren, wird auf den einschlägigen Stand der Technik verwiesen.

Gleiche Bauteile oder Bauteile mit gleicher Funktion sind dabei mit gleichen Bezugszeichen gekennzeichnet.

Es zeigt:

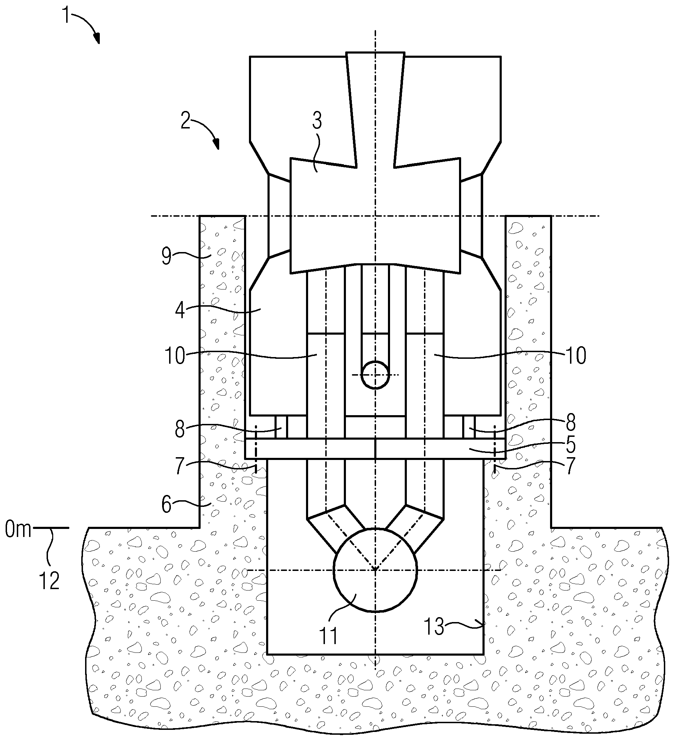

- Figur 1: eine Seitenansicht einer erfindungsgemäßen Dampfturbinenanlage.

Die Figur 1 zeigt eine Seitenansicht eines Teils einer Dampfturbinenanlage 1. Die Dampfturbinenanlage 1 umfasst unter anderem eine Niederdruck-Teilturbine 2. Die Niederdruck-Teilturbine 2 ist Teil einer Dampfturbine, die neben der Niederdruck-Teilturbine 2 eine Mitteldruck-Teilturbine und eine Hochdruck-Teilturbine umfasst. Die Niederdruck-Teilturbine 2 weist einen drehbar gelagerten Rotor und einen um den drehbar gelagerten Rotor angeordnetes Innengehäuse 3 auf. Um das Innengehäuse 3 ist ein Außengehäuse 4 angeordnet. Unter der Niederdruck-Teilturbine 2 ist ein Montagerahmen 5 angeordnet. Der Montagerahmen 5 ist aus Doppel-T-Trägern ausgebildet und liegt auf einem Fundament 6 auf. Das Fundament 6 weist im Bereich des Montagerahmens 5 Haltevorsprünge 7 auf. Der Montagerahmen 5 ist in diesen Haltevorsprüngen 7 derart angeordnet, dass die Gewichtslast von dem Montagerahmen 5 auf das Fundament 6 übertragen wird.

Das Außengehäuse 4 weist Stützvorrichtungen 8 auf, die die Gewichtslast des Außengehäuses 4 auf den Montagerahmen 6 überträgt.

Ebenso weist das Innengehäuse 3 in Richtung Montagerahmen 5 hin ausgebildete Gewichtsstützen auf (nicht dargestellt), die das Gewicht des Innengehäuses 3 auf den Montagerahmen 5 überträgt.

In alternativen Ausführungsformen kann das Fundament 6 derart ausgebildet sein, dass ein Hochplateau 9 entsteht, das im Wesentlichen bündig mit der Drehachse des Rotors abschließt. Das Innengehäuse 3 kann dadurch auch auf den Hochplateau 9 abgelegt werden. Des Weiteren werden auf dem Hochplateau 9 die Lager für den Rotor angeordnet.

Die Niederdruck-Teilturbine 2 weist eine Dampfentnahmeöffnung und/oder eine Anzapfung 10 auf. Die Anzapfung 10 ist unterhalb der Niederdruck-Teilturbine 2 angeordnet und führt zu einem Vorwärmer 11. Der Vorwärmer 11 ist zum Vorwärmen von Speisewasser ausgebildet. Des Weiteren ist der Vorwärmer 11 unter der Niederdruckt-Teilturbine 2, insbesondere unter dem Montagerahmen 5 angeordnet.

Das Fundament 6 ist in seiner vertikalen Richtung über einen Fixpunkt 12, der bei 0 Meter liegt, definiert. Der Vorwärmer 11 ist, wie in der Figur zu sehen, unterhalb des Fixpunktes 12 angeordnet und muss daher im Fundament 6 in einem Kellerraum 13 angeordnet werden.

Die Niederdruckteilturbine 2 weist eine seitliche Abströmung auf. Diese seitliche Abströmung (nicht dargestellt) wird auch als horizontale Abströmung bezeichnet. In alternativen Ausführungsformen können zwei horizontale Abströmungen angeordnet werden.

Die Abströmung ist über einen Dampfdom mit einem seitlich der Niederdruck-Teilturbine 2 angeordneten Kondensator verbunden (nicht dargestellt).

Der Montagerahmen 5 ist dabei derart ausgebildet, dass er Mittenführungen, Festpunkte, Federn oder Auflagen aufnimmt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dampfturbinenanlage,
mit einer eine Teilturbine (2) umfassenden Dampfturbine, die auf einem Montagerahmen (5) gestellt ist,
und die mindestens eine horizontale Abströmung aufweist, wobei die Teilturbine eine Dampfentnahmeöffnung und/oder eine Anzapfung (10) aufweist, wobei die Dampfentnahmeöffnung und/oder Anzapfung (10) mit einem Vorwärmer (11), der zum Vorwärmen von Speisewasser strömungstechnisch verbunden ist,
**dadurch gekennzeichnet, dass**
der Vorwärmer (11) unterhalb der Teilturbine angeordnet ist.

2. Dampfturbinenanlage nach Anspruch 1,
wobei Teilturbine als Niederdruckstufe bildenden Niederdruck-Teilturbine (2) ausgebildet ist.

3. Dampfturbinenanlage nach Anspruch 1 oder 2,
wobei die Abströmung über einen Dampfdom mit einem seitlich der Niederdruck-Teilturbine (2) angeordneten Kondensator verbunden ist.

4. Dampfturbinenanlage nach Anspruch 1, 2 oder 3,
wobei die Teilturbine ein Innengehäuse (3) aufweist, wobei das Innengehäuse (3) tragend auf dem Montagerahmen (5) abgestützt ist.

5. Dampfturbinenanlage nach einem der vorhergehenden Ansprüche,
wobei die Teilturbine ein Außengehäuse (4) aufweist, wobei das Außengehäuse (4) tragend auf dem Montagerahmen abgestützt ist.

6. Dampfturbinenanlage nach einem der vorhergehenden Ansprüche,
wobei ein Fundament (6) vorgesehen ist, auf dem der Montagerahmen (5) angeordnet ist.

7. Dampfturbinenanlage nach einem der vorhergehenden Ansprüche,
wobei das Fundament (6) einen Kellerraum (13) aufweist, in dem der Vorwärmer (11) angeordnet ist.

8. Dampfturbinenanlage nach einem der vorhergehenden Ansprüche,
wobei der Montagerahmen (5) Mittenführungen, Festpunkte, Feder oder Auflagen aufnimmt.

9. Dampfturbinenanlage nach einem der vorhergehenden Ansprüche,
wobei das Fundament (6) einen Haltevorsprung aufweist, in dem der Montagerahmen angeordnet ist und derart ausgebildet ist, dass die Gewichtslast auf den Montagerahmen (5) auf das Fundament übertragen wird.
